# EUROPÄISCHE PATENTSCHRIFT

(11) **EP 2 119 579 B1**
(45) Veröffentlichungstag und Bekanntmachung des Hinweises auf die Patenterteilung: **02.01.2013**
(21) Anmeldenummer: 09002233.6
(22) Anmeldetag: 18.02.2009
(51) Int. Cl.: B60G 7/04, B60G 13/00, B60G 17/02

(54) **Vorrichtung zur Höhenverstellung der Karosserie eines Kraftfahrzeuges**
Device for adjusting the height of the body of a motor vehicle
Dispositif de réglage en hauteur de la carrosserie d'un véhicule automobile

(30) Priorität: 16.05.2008 DE 102008023891
(43) Veröffentlichungstag der Anmeldung: 18.11.2009
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A2- 1 479 542
- WO-A1-2006/131343
- DE-A1-102006 032 178
- DE-B3-102004 018 701

## Beschreibung

Die Erfindung betrifft eine Vorrichtung zur Höhenverstellung der Karosserie eines Kraftfahrzeuges gemäß dem Oberbegriff des Patentanspruches 1.

Eine Höhenverstellvorrichtung ist beispielsweise in der WO 2006/012858 A1 beschrieben. Dabei ist seitlich des Teleskop-Stoßdämpfers einer Federbein-Radaufhängung ein Elektromotor angeordnet, der über einen Zahnradtrieb einen als Gewindering ausgebildeten Federteller der Tragfeder verdreht. Der Gewindering ist auf einem Gewindeabschnitt des Dämpferrohres angeordnet. Durch elektromotorisches Verdrehen des Gewinderinges kann eine Höhenverstellung der Karosserie des Kraftfahrzeuges bewirkt werden, z. B. von einer Hochniveaustellung über eine Normalniveaustellung in eine Tiefniveaustellung. Die Tragfeder wird dabei bei der Niveaueinstellung mit dem Gewindering verdreht, die Federrate als solches bleibt im Wesentlichen unverändert. Ist bei einer derartigen Radaufhängung eine den Einfederweg begrenzende Zusatzfeder, z. B. ein gummielastischer Anschlagpuffer vorgesehen, so ändert sich der Federweg der Radaufhängung durch die mit Bezug zur Normalniveaustellung früher oder später in Wirkstellung geratende Zusatzfeder.

Bei einer weiteren bekannten Höhenverstellvorrichtung wird der Fußpunkt der Tragfeder, das heißt der karosserieseitige Federteller, ebenfalls in der Höhe verändert und damit die Höhe des Fahrzeuges gegenüber der Fahrbahn verändert. Der hierzu erforderliche Steller befindet sich teilweise innerhalb in dem zu diesem Zwecke geänderten Karosserielängsträger. Der erforderliche Aktuator ist ein elektrisch angetriebener Kugelgewindetrieb. Die zugeordnete Kugelgewindespindel wird von einem Elektromotor, der im Inneren der Spindel angeordnet ist, über eine Getriebestufe in Rotation versetzt. Die mit dem Verstellfederteller verbundene Mutter vollführt demzufolge eine Hubbewegung. Dadurch verschiebt die Tragfeder den Radträger in die von der Steuerung vorgegebene Höhenlage. Die Tragfeder selbst bleibt in dem jeweils betrachteten Beladungszustand in ihrer Länge unverändert. Nach dem Verstellvorgang verhindert ein Freilauf, dass im stromlosen Zustand das Fahrzeug durch sein Eigengewicht wegen des nicht selbsthemmenden Kugelgewindetriebes einsinkt. Der Einfederweg des Rades wird durch die karosserieseitige Zusatzfeder, die sich in der oberen Dämpferaufnahme befindet, bestimmt. Demgegenüber wird der Ausfederweg des Rades durch den Zuganschlag bestimmt, der sich im Dämpfer selbst befindet.

Durch die DE 10 2004 018 701 B3 ist es ferner bekannt, den Einfederweg einer Radaufhängung für Kraftfahrzeuge dadurch veränderlich zu begrenzen, dass die Zusatzfeder am Teleskop-Stoßdämpfer über einen elektrischen Stellmotor in zwei axial versetzt zueinander liegenden Positionen am Aufbau des Kraftfahrzeuges abgestützt ist. Damit soll vermieden werden, das bei größeren Radumfängen des Rades, z. B. durch Auflegen einer Schneekette, das Rad innerhalb des Radhauses der Karosserie des Kraftfahrzeuges anstreift und Schäden verursacht.

Aus der DE 10 2006 032 178 A1 ist eine gattungsgemäße Vorrichtung zur Höhenverstellung der Karosserie eines Kraftfahrzeuges bekannt. Die Vorrichtung weist eine zwischen einem Radführungselement der Radaufhängung und dem Aufbau eingeschaltete Tragfeder auf, die an einem Federteller abgestützt ist. Der Federteller ist über eine Stelleinrichtung höhenverstellbar. Zudem weist die Vorrichtung eine, einen definierten Federweg in Einfederrichtung begrenzende Zusatzfeder auf. Aus der WO 2006/131343 A1 ist eine weitere Vorrichtung zur Höhenverstellung der Karosserie eines Kraftfahrzeuges bekannt, die eine Zusatzfeder aufweist. Die Zusatzfeder kann am verlagerbaren Abstützpunkt der Tragfeder befestigt sein, wodurch sie, einer Höhenverstellung des Federtellers folgend, verstellt wird.

Aufgabe der Erfindung ist es, eine Vorrichtung zur Höhenverstellung der Karosserie eines Kraftfahrzeuges vorzuschlagen, die mit baulich einfachen Mitteln größere konstruktive Freiheitsgrade in der Auslegung von Tragfeder und Zusatzfeder unter Berücksichtigung günstiger Federwege der Radaufhängung ermöglicht.

Diese Aufgabe wird erfindungsgemäß mit den Merkmalen des Patentanspruches 1 gelöst. Vorteilhafte Weiterbildungen der Erfindung geben die abhängigen Ansprüche an.

Gemäß Patentanspruche 1 ist der Zusatzfeder eine Stelleinrichtung zugeordnet, mit der diese, vorzugsweise einer Höhenverstellung des Verstellfedertellers folgend, ebenfalls höhenverstellbar ist. Auf diese Weise kann bei einer Höhenverstellung der Karosserie auch die Zusatzfeder zur Aufrechterhaltung eines im Wesentlichen gleichen Einfederweges verstellt werden. Bevorzugt kann die Zusatzfeder bewegungsgekoppelt mit dem Verstellfederteller höhenverstellbar sein. Zur Einsparung von Bauraum ist es besonders günstig, wenn sowohl die Zusatzfeder als auch der Verstellfederteller mittels einer gemeinsamen Stelleinrichtung höhenverstellbar sind.

Die Zusatzfeder ist erfindungsgemäß zwischen einem aufbauseitigen Dämpferlager eines Teleskop-Stoßdämpfers der Radaufhängung und dessen Dämpferzylinder angeordnet und über die Stelleinrichtung axial verstellbar.

Die Zusatzfeder kann bevorzugt mit der Stelleinrichtung der Höhenverstellvorrichtung derart gekoppelt sein, dass mit einer Höhenverstellung der Karosserie auch die Zusatzfeder zur Aufrechterhaltung eines im Wesentlichen gleichen Federweges verstellt wird.

Mit baulich einfachen Mitteln wird somit der Einsatz der Zusatzfeder der Höhenverstellung nachgeführt und stellt einen im Wesentlichen gleichen Federweg sicher, der ein Komprimieren der Tragfeder auf Blockmaß vermeidet und eine noch gleichmäßigere Federrate über den Federweg sicherstellt. Ein separater Stellmotor an der Zusatzfeder kann dabei entfallen. Außerdem ist durch die triebliche Verbindung beider Verstellglieder - im Gegensatz zu getrennt angebrachten Antrieben - eine Fehlsteuerung ausgeschlossen. Der Zusatzfeder wird daher stets der richtige Verstellweg aufgezwungen.

Insbesondere kann die Zusatzfeder über einen Stelltrieb axial verschiebbar sein, wobei der Stelltrieb mit der Stelleinrichtung der Tragfeder trieblich verbunden ist. Die Verbindung kann z. B. über ein entsprechend ausgelegtes Hebelgetriebe, etc. hergestellt sein.

Die Stelleinrichtung kann ferner ein elektromotorischer Aktuator mit einem auf die Tragfeder wirkenden Kugelgewindetrieb sein, dessen über eine drehbare Gewindespindel axial verschiebbare Gewindemutter mit dem Verstellfederteller der Tragfeder zusammenwirkt, wobei die Gewindespindel trieblich mit dem Stelltrieb der Zusatzfeder gekoppelt ist. Dies ermöglicht eine fertigungstechnisch günstige Integration bzw. Ankopplung des Stelltriebes der Zusatzfeder mit der Stelleinrichtung an der Tragfeder.

Je nach Wahl der Gewindesteigungsverhältnisse zwischen dem Kugelgewindetrieb zur Gewindehülse in der Dämpferaufnahme und/oder der Übersetzungsverhältnisse der beiden Zahnradstufen erfolgt der entsprechende Verstellweg an der Zusatzfeder aus der Vorgabe des Verstellweges an der Niveauverstellung.

In vorteilhafter Weiterbildung der Erfindung können bei einer Radaufhängung mit räumlich voneinander getrennt angeordneter Tragfeder und Zusatzfeder der Stelltrieb der Zusatzfeder und die Stelleinrichtung der Tragfeder mittels einer biegsamen, torsionsfesten Welle miteinander gekoppelt sein. Durch den Einsatz einer biegsamen Welle als Übertragungsmittel können die Tragfeder und die Zusatzfeder ohne bauliche Zwänge und konstruktive Kompromisse ausgelegt und angeordnet sowie eine robuste Verbindung hergestellt werden.

Desweiteren kann der Stelltrieb der Zusatzfeder durch einen kostengünstigen Gewindetrieb mit einer aufbauseitig abgestützten Gewindehülse und einer dazu verdrehbaren, die Zusatzfeder aufnehmenden Gewindemutter gebildet sein, wobei die Gewindemutter über einen Zahnradtrieb verdrehbar ist. Durch den Selbsthemmungseffekt des Gewindetriebes können die axial wirkenden Zusatzfederkräfte zuverlässig abgestützt bzw. in den Ausbau des Kraftfahrzeuges eingeleitet werden.

In vorteilhafter Weise kann ferner die Gewindespindel des Kugelgewindetriebes über einen Zahnradtrieb auf den Stelltrieb der Zusatzfeder abtreiben. Demzufolge kann die Gewindespindel baueinheitlich und somit mit geringem fertigungstechnischem Mehraufwand den Stelltrieb der Zusatzfeder mitbetätigen.

Dabei können in baulich günstiger Weise die Zahnradtriebe an der Stelleinrichtung und/oder an dem Stelltrieb der Zusatzfeder Stirnradtriebe sein, deren Zahnritzel über die biegsame Welle trieblich miteinander verbunden sind.

Eine insbesondere für eine Kraftfahrzeug-Hinterachse vorteilhafte Konstruktion sieht vor, dass die Tragfeder und die Stelleinrichtung aufbauseitig an einem tiefer liegenden Längsträger des Aufbaus des Kraftfahrzeuges und der Stoßdämpfer höher liegend an einer an den Längsträger anschließenden Seitenwand angeordnet bzw. angelenkt sind und dass die Zahntriebe der Zusatzfeder und der Stelleinrichtung über die in etwa senkrecht und parallel zur Seitenwand verlaufende, biegsame Welle miteinander gekoppelt sind.

Schließlich ist eine besonders zweckmäßige Anbindung von Tragfeder und Stoßdämpfer dadurch geschaffen, dass die Tragfeder radaufhängungsseitig an einem etwa horizontal und zur senkrechten Fahrzeuglängsmittelebene ausgerichteten Ausleger eines Radträgers der Radaufhängung abgestützt ist, während der Stoßdämpfer mit seinem Dämpferrohr mit einer darüber liegenden Konsole des Radträgers gelenkig verbunden ist.

Ein Ausführungsbeispiel der Erfindung ist im Folgenden mit weiteren Einzelheiten näher erläutert. Die schematische Zeichnung zeigt in:
- Fig. 1: einen senkrechten Querschnitt durch eine Radaufhängung in einem Kraftfahrzeug, mit Darstellung des Radträgers, eines Teleskop-Stoßdämpfers und einer an einem Längsträger abgestützten Tragfeder, sowie mit einer Stelleinrichtung zur Höhenverstellung der Karosserie des Kraftfahrzeuges und einem mit der Stelleinrichtung gekoppelten Stelltrieb für eine Zusatzfeder,
- Fig. 2: in vergrößerter Darstellung den Stelltrieb der Zusatzfeder gemäß Fig. 1,
- Fig.3: in ebenfalls vergrößerter Darstellung den Zahntrieb der Stelleinrichtung zum axialen Nachführen der Zusatzfeder über deren Stelltrieb,
- Fig. 4: in einer schematischen Darstellung ein nicht von der Erfindung umfasstes Vergleichsbeispiel, in welchem die Zusatzfeder nicht höhenverstellbar ist.

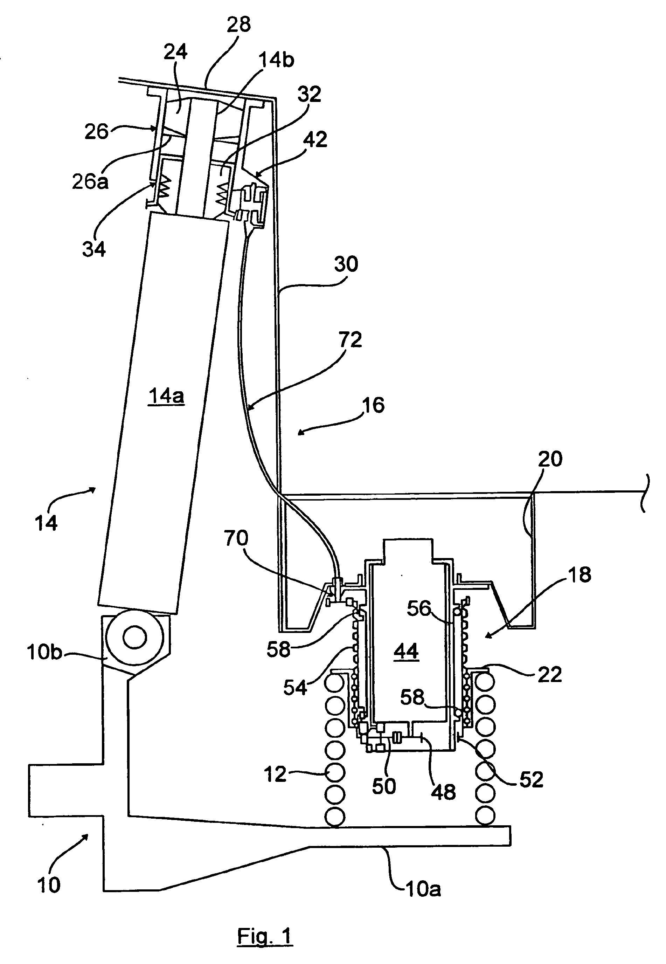

In der **Fig. 1** ist grob schematisch der Radträger 10 einer nur teilweise ersichtlichen Radaufhängung bzw. einer Hinterachse dargestellt, der an seinem unteren Bereich einen nach innen, der Fahrzeugmitte zu abragenden Ausleger 10a aufweist, an dem eine Schraubendruckfeder als Tragfeder 12 abgestützt ist.

Der Radträger 10 ist ferner mit einer oberen Konsole 10b versehen, an der das Dämpferrohr 14a eines Teleskop-Stoßdämpfers 14 angelenkt ist.

Der Radträger 10 trägt in bekannter Weise ein drehbar gelagertes Rad (nicht dargestellt) und ist über ebenfalls nicht dargestellte Radführungselemente wie Querlenker, Lenker, etc. am Aufbau 16 der Karosserie des Kraftfahrzeuges angelenkt.

Die Tragfeder 12 ist aufbauseitig über eine noch zu beschreibende Stelleinrichtung 18 an einem Längsträger 20 abgestützt, wobei die Tragfeder 12 an einem Verstellfederteller 22 anliegt, der axial relativ zum Aufbau 16 verschiebbar ist. Durch axiales Verschieben des Verstellfedertellers 22 nach oben oder unten kann die Karosserie des Kraftfahrzeuges ausgehend von einer Normainiveaustellung in eine Hochniveaustellung (z. B. zum Geländefahren) oder in eine Tiefniveaustellung zum Fahren bei hohen Geschwindigkeiten höhenverstellt werden.

Der Stoßdämpfer 14 ist über seine Kolbenstange 14b und ein gummielastisches Dämpferlager 24 an einer ringförmigen Konsole 26 angelenkt, welche Konsole 26 wiederum an einer etwa horizontal verlaufenden Stützwand 28 des Aufbaus 16 befestigt ist.

Die Stützwand 28 schließt an eine im Wesentlichen senkrecht ausgerichtete Seitenwand 30 an, die anderenends mit dem tiefer liegenden Längsträger 20 fest verbunden ist. Die Bauteile 20, 30, 28 sind dem das Rad umhüllenden Radhaus (nicht ersichtlich) der Karosserie des Kraftfahrzeuges zugewandt bzw. bilden Teile dieses Radhauses.

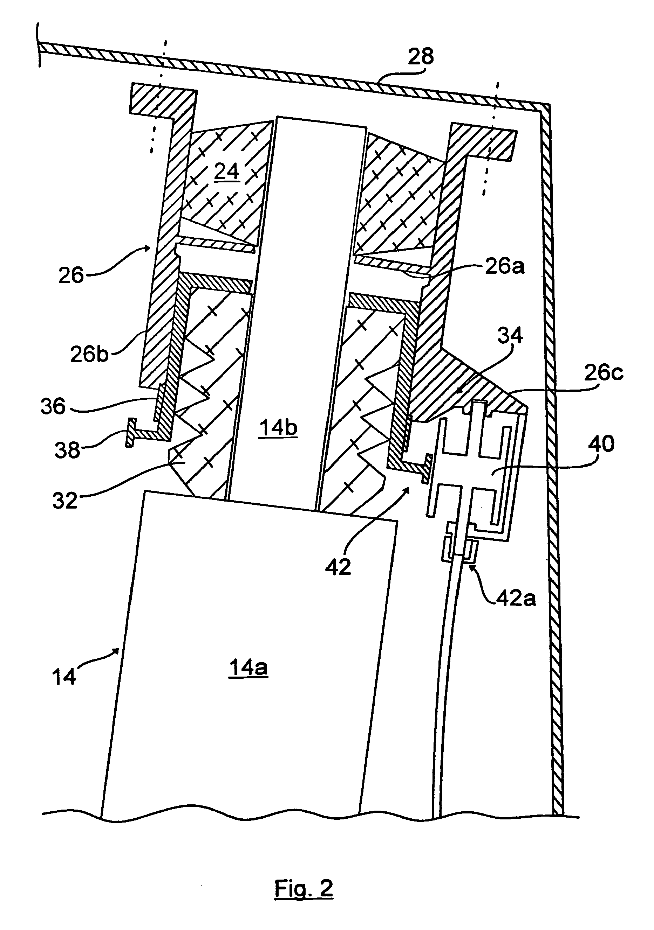

Zwischen dem Dämpferlager 24 bzw. einer Ringwand 26a der Konsole 26 (vgl. auch Fig. 2) und dem Dämpferrohr 14a ist um die Kolbenstange 14b ein gummielastischer Anschlagpuffer bzw. eine Zusatzfeder 32 angeordnet, die in ihrer axialen Länge und Anordnung so konzipiert ist, dass sie bei einem definierten Einfederweg zur Wirkung kommt und bei einem progressiven Anstieg der Gesamtfederrate in an sich bekannter Weise als Federwegbegrenzung dient.

Die Ausfederwegbegrenzung (nicht dargestellt) kann z. B. durch einen Zuganschlag im Stoßdämpfer 14 oder anderweitig definiert sein.

Die Zusatzfeder 32 ist über einen Stelltrieb 34 axial verstellbar an der Konsole 26 angeordnet. Dazu ist die Zusatzfeder in einer im Querschnitt etwa hutförmigen, rotationssymmetrischen Gewindemutter 36 abgestützt, die ein Außengewinde mit im Selbsthemmungsbereich liegender Steigung aufweist.

Die Gewindemutter 36 wirkt mit einer an die Konsole 26 angeformten Gewindehülse 26b mit einem korrespondierenden Innengewinde zusammen.

Ferner ist an der Gewindemutter 36 ein Stirnzahnrad 38 ausgebildet, das mit einem Zahnritzel 40 in Eingriff ist. Das Zahnritzel 40 ist in einem Gehäuseabschnitt 26c der Konsole 26 drehbar gelagert.

Das Stirnzahnrad 38 und das Zahnritzel 40 bilden einen Zahnradtrieb 42, mittels dem durch Verdrehen der Gewindemutter 36 die Zusatzfeder 32 axial verstellbar ist, um eine veränderliche Einfederwegbegrenzung zu bilden.

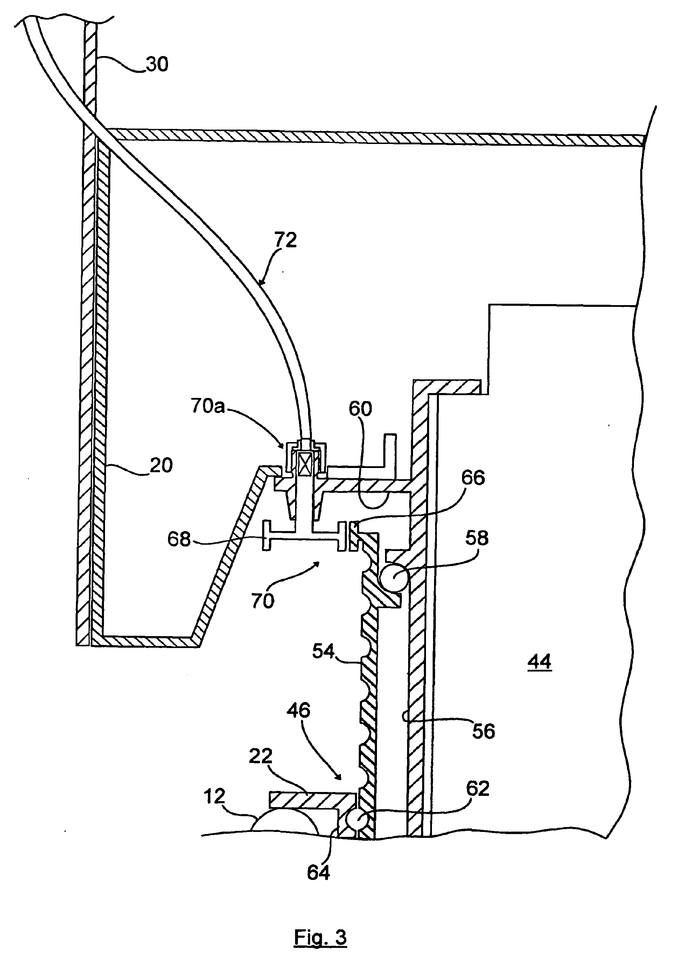

Die Stelleinrichtung 18 ist durch einen elektromotorischen Aktuator gebildet, der sich im Wesentlichen (vgl. Fig. 1 und 3) aus einem Elektromotor 44 und einem Kugelgewindetrieb 46 zusammensetzt.

Der Elektromotor 44 treibt dabei über Stirnzahnräder 48, 50 und einen Innenzahnkranz 52 (**Fig. 1**) eine Gewindespindel 54 an, die auf einer auch den Elektromotor 44 tragenden Führungshülse 56 über Wälzlager 58 bzw. Schrägschulter-Kugellager drehbar und axial unverschiebbar gelagert ist. Die Führungshülse 56 ist an eine Basisplatte 60 angeformt, über die die gesamte Stelleinrichtung 18 an dem Längsträger 20 befestigt ist.

Unter Zwischenschaltung von Kugeln 62 ist die Gewindemutter 64 auf der Gewindespindel 54 gelagert und kann somit in an sich bekannter Weise durch Verdrehen der Gewindespindel 54 axial verschoben werden. Die Gewindemutter 64 ist einstückig mit dem Verstellfederteller 22 ausgeführt, der die Gewindemutter 64 unverdrehbar hält und an dem die Tragfeder 12 abgestützt ist.

Der Elektromotor 44 ist mit einer Bremse und/oder einem schaltbaren Freilauf (nicht dargestellt) versehen, um bei nicht aktiviertem Elektromotor 44 eine unbeabsichtigte Verdrehung der Gewindespindel 54 auszuschließen.

An die Gewindespindel 54 ist an ihrer oberen Stirnseite und dem oberen Wälzlager 58 benachbart ein Zahnkranz 66 angeformt, der mit einem Stirnzahnrad 68 einen abtreibenden Zahnradtrieb 70 bildet. Das Stirnzahnrad 68 ist in der Basisplatte 60 drehbar gelagert.

Die beiden Zahntriebe 42, 70 sind mittels einer biegsamen, torsionssteifen Welle 72 trieblich miteinander verbunden.

Die biegsame Welle 72 ist in an sich bekannter Weise durch eine Seele aus verdrillten Stahldrähten und einen umhüllenden, ebenfalls biegsam ausgeführten Metalischlauch hergestellt und erstreckt sich wie aus **Fig. 1** ersichtlich ausgehend von dem Zahntrieb 70 durch den Längsträger 20 hindurch und dann etwa senkrecht entlang der Seitenwand 30 verlaufend zum höher liegenden Zahntrieb 42.

Die biegsame Welle 72 kann wie bei bekannten Tachometerwellen von Kraftfahrzeugen über in Drehrichtung formschlüssige Kupplungsverbindungen 42a, 70a mit Überwurfmuttern mit den Stirnzahnrädern 68, 40 trieblich verbunden sein und somit in einfacher Weise montiert bzw. demontiert werden.

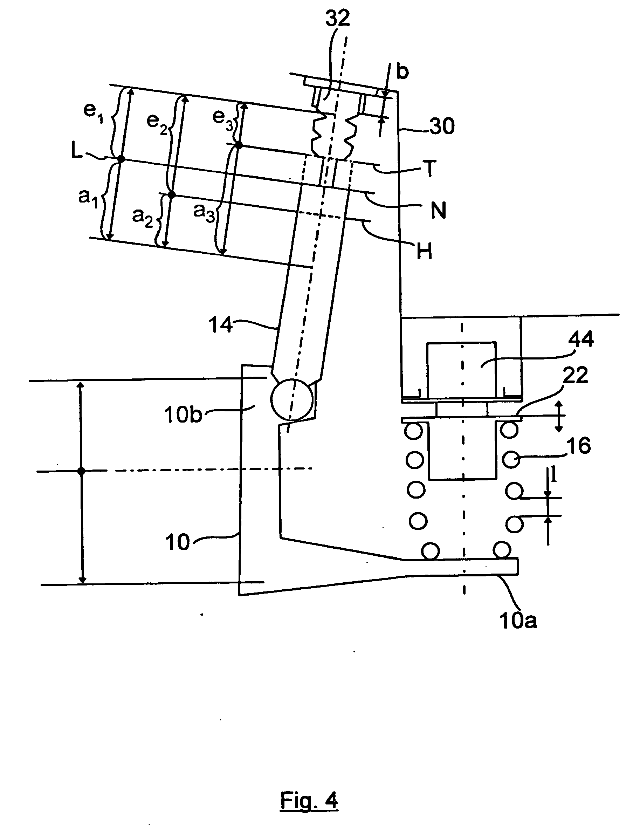

Nachfolgend ist die Betriebsweise der Erfindung bei einer Höhenverstellung des Verstellfedertellers 22 beschrieben. Zum besseren Verständnis der Erfindung ist jedoch zunächst anhand des in der **Fig. 4** gezeigten, nicht von der Erfindung umfassten Vergleichsbeispiels eine Höhenverstellung des Verstellfedertellers 22 beschrieben. Gemäß der **Fig. 4** ist die Zusatzfeder 32 nicht gleichzeitig mit dem Verstellfederteller 22 der Niveauverstellung verstellbar. Abgesehen von der nicht höhenverstellbaren Zusatzfeder 32 entspricht das in der **Fig. 4** gezeigte Vergleichsbeispiel im Aufbau und in der Funktionsweise dem in den **Fig. 1 bis 3** gezeigten Ausführungsbeispiel. Insofern wird Bezug auf die Beschreibung des Ausführungsbeispiels genommen.

Wie aus der **Fig. 4** hervorgeht, sind für die unterschiedlichen, mittels des Verstellfedertellers 22 einstellbaren Höhenniveaus des Fahrzeugs, nämlich, ein Tiefniveau T, ein Normalniveau N sowie ein Hochniveau H, jeweils die Einfederwege e₁ bis e₃ sowie die Ausfederwege a₁ bis a₃ gezeigt, und zwar ausgehend von einem Leerzustand L des Fahrzeugs. So ist beispielsweise in der Normalniveau-Stellung N sowohl ein bestimmter Einfederweg e₁ als auch ein bestimmter Ausfederweg a₁ vorgegeben. Der Einfederweg e₁ wird von der Zusatzfeder 32 begrenzt, das heißt deren Blockmaß b, bis zu dem die Zusatzfeder 32 komprimierbar ist.

Damit die Betriebsfähigkeit der in der **Fig. 4** gezeigten Feder-/Dämpferanordnung nicht beeinträchtigt ist, muss im Hochniveau H eine Windungsberührung der über eine Windungsluft I beabstandeten Tragfeder-Windungen bei voll eingefederter Dämpferanordnung vermieden werden. Ebenso muss im Tiefniveau T auch nach Überwinden des großen Ausfederweges a₃ ein Abheben der Tragfeder 16 bei voll ausgefederter Dämpferanordnung vermieden werden.

Vor diesem Hintergrund darf die Tragfeder 16 nicht zu kurz sein, um die Gefahr des Abhebens im ausgefederten Zustand beim Tiefniveau T zu vermeiden, das heißt, es muss eine Restvorspannkraft, beispielsweise 500 N, gewährleistet sein. Außerdem ist es erforderlich, dass die Tragfeder 16 die zulässigen Spannungen in keinem Betriebspunkt überschreitet. Entsprechend darf die Tragfeder 16 auch nicht zu lang sein, damit in der HochniveauStellung H bei voller Einfederung keine Windungsberührung stattfindet, das heißt, noch genügend große Windungsluft I vorherrscht.

Die Tragfeder 16 müsste daher gemäß der **Fig. 4** durch die beidseitige Verschiebung aus der Leerlage L unter Beibehaltung der vollen Federwege weitaus größere Hübe vollführen als es geometrisch möglich sind. Das heißt, die Tragfeder 16 hat beispielhaft in der Tiefniveaustellung T mehr Ausfederweg a₃ und gleichzeitig in der Hochniveaustellung H mehr Einfederweg e₂ zu bewerkstelligen. Beide Randbedingungen könnte die Tragfeder jedoch nur "virtuell" erfüllen.

Um diesem Problem beizukommen, müsste der Ein- und Ausfederweg eingeschränkt werden, um eine Windungsberührung bei der Tragfeder 16 sowie ein Abheben der Tragfeder 16 zu vermeiden.

Eine nicht von der Erfindung umfasste Möglichkeit besteht darin, die Zusatzfeder 32 um einen gewissen Betrag zu verlängern. Für den kritischen Fall "volle Einfederung sowie Hochniveaustellung H" ist dieser Kompromiss akzeptabel, denn sofern das Hochniveau H eingestellt ist, bewegt sich das Fahrzeug möglicherweise im Gelände. In diesem Fahrzustand ist es bekanntermaßen nicht erwünscht, dass der volle Einfederweg e₂ zur Verfügung steht. Hier ist es durchaus sinnvoll, das Fahrzeug nicht auf den ursprünglichen, minimalen Bodenabstand einfedern zu lassen.

Nachteilig ist jedoch eine solche Verlängerung der Zusatzfeder 32 in der Tiefniveaustellung T und in der Normalniveaustellung N. Sowohl in der Normalniveau- als auch in der Tiefniveaustellung ist nämlich der Einfederweg ebenfalls um den gleichen Betrag eingeschränkt wie in der Hochniveaustellung H, das heißt es geht Federweg verloren.

Die oben geschilderten Nachteile können mittels der erfindungsgemäßen Bewegungskopplung zwischen Zusatzfeder 32 und den Verstellfederteller 22 beseitigt werden, wodurch beide gleichzeitig höhenverstellt werden.

Bei einer beispielhaften Verstellung der Karosserie des Kraftfahrzeuges z. B. von Normalniveau N in die Hochniveaustellung H wird durch entsprechende Ansteuerung des Elektromotors 44 die Gewindespindel 54 des Kugelgewindetriebes 46 verdreht, wobei die Gewindemutter 64 mit dem Verstellfederteller 22 axial nach unten verschoben wird. Dies führt zu einer Anhebung der Karosserie bzw. des Aufbaus 16 in einem konstruktiv vorgegebenen Maße.

Über den Zahntrieb 70, die biegsame Welle 72 und den Zahntrieb 42 wird gleichzeitig die Gewindemutter 36 mit der Zusatzfeder 32 relativ zur Konsole 26 bzw. zur Gewindehülse 26b verdreht, wodurch die Zusatzfeder 32 ebenfalls gezielt axial nach unten verlagert wird. Damit wird bewirkt, dass die Zusatzfeder 32 früher (im Vergleich zum Normalniveau) am Dämpferrohr 14a zur Anlage kommt und den konstruktiv vorgegebenen Einfederweg einschränkt. Ein Komprimieren der Tragfeder 12 auf Blockmaß ist dadurch vermieden (die Situation ist in der Fig. 1 dargestellt).

Wird die Karosserie des Kraftfahrzeuges auf Tiefniveau verstellt, wobei durch Drehrichtungsumkehr des Elektromotors 44 die Gewindemutter 64 mit dem Federteller 22 axial nach oben relativ zur Normalniveaustellung verstellt wird, so würde bei unveränderter Zusatzfeder 32 diese früher zum Einsatz kommen und gegebenenfalls ein unkomfortables Fahrverhalten des Kraftfahrzeuges bewirken.

Durch die gleichzeitige Verstellung der Zusatzfeder 32 über die Gewindemutter 36 wird jedoch die Zusatzfeder 32 ebenfalls nach oben verlagert und kommt somit im Vergleich zur Normalniveaustellung später zum Einsatz, so dass über den gesamten Einfederweg der Radaufhängung gesehen eine konstruktiv vorgegebene, progressive Federrate zunächst der Tragfeder 12 und dann mit der Zusatzfeder 32 erzielt ist.

Durch das Nachführen der Zusatzfeder 32 abhängig von der Höhenverstellung der Karosserie des Kraftfahrzeuges kann die Tragfeder 12 hinsichtlich ihrer Konzeption und geometrischen Maße verbessert an die baulichen Verhältnisse in der Radaufhängung ausgelegt werden (z. B. Baulänge, Außendurchmesser, etc.), so dass Federwegsbeschränkungen vermieden werden können. Ferner kann die Gesamtfederrate der Radaufhängung und damit verbunden der Fahrkomfort des Kraftfahrzeuges abgestimmt auf verschiedene Niveaustellungen günstig beeinflusst werden.

Das Übersetzungsverhältnis zwischen der axialen Verstellung der Tragfeder 12 bzw. des Verstellfedertellers 22 zur axialen Verstellung der Zusatzfeder 32 kann abhängig von den baulichen Verhältnissen der Radaufhängung mit dem Radträger 10 1:1 oder davon abweichend ausgelegt sein. Dies kann über die Auslegung der Zahntriebe 70, 42 und durch die gewählten Steigungen im Kugelgewindetrieb 46 bzw. Stelltrieb 34 an der Zusatzfeder 32 bewerkstelligt werden.

Die Zusatzfeder 32 kann gegebenenfalls auch durch eine weitere, entsprechend angeordnete Schraubendruckfeder gebildet sein.

Die Zahnradtriebe 42, 70 können in nicht dargestellter Weise durch gegebenenfalls aus Kunststoff hergestellte Kapselungen oder gummielastische Schutzmanschetten gegen umweltbedingte Verschmutzungen, Feuchtigkeit, etc. geschützt sein.

## Patentansprüche

1. Vorrichtung zur Höhenverstellung der Karosserie eines Kraftfahrzeuges, mit einer zwischen einem Radführungselement (10) der Radaufhängung und dem Aufbau (16) eingeschalteten Tragfeder (12), die an einem Federteller (22) abgestützt ist, der über eine Stelleinrichtung (18) höhenverstellbar ist, und mit einer einen definierten Federweg in Einfederrichtung begrenzenden Zusatzfeder (32), **dadurch gekennzeichnet, dass** der Zusatzfeder (32) eine Stelleinrichtung (18) zugeordnet ist, mit der die Zusatzfeder (32), vorzugsweise einer Höhenverstellung des Federtellers (22) folgend, höhenverstellbar ist, und dass die Zusatzfeder (32) zwischen einem aufbauseitigen Dämpferlager (24) eines Teleskop-Stoßdämpfers (14) der Radaufhängung und dessen Dämpferzylinder (14a) angeordnet ist, und dass die Zusatzfeder (32) über die Stelleinrichtung (18) axial verstellbar ist.

2. Vorrichtung nach Anspruch 1, **dadurch gekennzeichnet, dass** die Zusatzfeder (32) bewegungsgekoppelt mit dem Federteller (22) höhenverstellbar ist.

3. Vorrichtung nach Anspruch 1 oder 2, **dadurch gekennzeichnet, dass** die Zusatzfeder (32) und der Federteller (22) einer gemeinsamen Stelleinrichtung (18) zugeordnet sind.

4. Vorrichtung nach einem der vorhergehenden Ansprüche, **dadurch gekennzeichnet, dass** die Zusatzfeder (32) mit der Stelleinrichtung (18) derart gekoppelt ist, dass mit einer Höhenverstellung der Karosserie auch die Zusatzfeder (32) zur Aufrechterhaltung eines im Wesentlichen gleichen Federweges verstellt wird.

5. Vorrichtung nach einem der vorhergehenden Ansprüche, **dadurch gekennzeichnet, dass** die Zusatzfeder (32) über einen Stelltrieb (34) axial verschiebbar ist und dass der Stelltrieb (34) mit der Stelleinrichtung (18) der Tragfeder (12) trieblich verbunden ist.

6. Vorrichtung nach einem der vorhergehenden Ansprüche, **dadurch gekennzeichnet, dass** die Stelleinrichtung (18) ein elektromotorischer Aktuator mit einem auf die Tragfeder (12) wirkenden Kugelgewindetrieb (46) ist, dessen über eine drehbare Gewindespindel (54) axial verschiebbare Gewindemutter (64) mit dem Verstellfederteller (22) der Tragfeder (12) zusammenwirkt und dass die Gewindespindel (54) trieblich mit dem Stelltrieb (34) der Zusatzfeder (32) gekoppelt ist.

7. Vorrichtung nach einem der vorhergehenden Ansprüche, **dadurch gekennzeichnet, dass** bei einer Radaufhängung mit räumlich voneinander getrennt angeordneter Tragfeder (12) und Zusatzfeder (32) der Stelltrieb (34) der Zusatzfeder (32) und die Stelleinrichtung (18) mittels einer biegsamen, torsionsfesten Welle (72) miteinander gekoppelt sind.

8. Vorrichtung nach einem der Ansprüche 5 bis 7, **dadurch gekennzeichnet, dass** der Stelltrieb (34) der Zusatzfeder (32) durch einen Gewindetrieb mit einer aufbauseitig abgestützten Gewindehülse (26b) und einer dazu verdrehbaren, die Zusatzfeder (32) aufnehmenden Gewindemutter (36) gebildet ist, wobei die Gewindemutter (36) über einen Zahnradtrieb (42) verdrehbar ist.

9. Vorrichtung nach einem der Ansprüche 6 bis 8, **dadurch gekennzeichnet, dass** die Gewindespindel (54) des Kugelgewindetriebes (46) über einen Zahnradtrieb (70) auf den Stelltrieb (34) der Zusatzfeder (32) abtreibt.

10. Vorrichtung nach einem der Ansprüche 8 oder 9, **dadurch gekennzeichnet, dass** der Zahnradtrieb (70, 42) an der Stelleinrichtung (18) und/oder an dem Stelltrieb (34) der Zusatzfeder (32) ein Stirnradtrieb ist, dessen Zahnritzel (68, 40) über die biegsame Welle (72) trieblich miteinander verbunden sind.

11. Vorrichtung nach einem der vorhergehenden Ansprüche, **dadurch gekennzeichnet, dass** die Tragfeder (12) und die Stelleinrichtung (18) aufbauseitig an einem tiefer liegenden Längsträger (20) des Aufbaus (16) des Kraftfahrzeuges und der Stoßdämpfer (14) mit Zusatzfeder (32) höher liegend an einer an den Längsträger (20) anschließenden Seitenwand (30) angeordnet bzw. angelenkt sind und dass die Zahnradtriebe (42, 70) der Zusatzfeder (32) und der Stelleinrichtung (18) über die in etwa senkrecht und parallel zur Seitenwand (30) verlaufende, biegsame Welle (72) miteinander gekoppelt sind.

12. Vorrichtung nach Anspruch 11, **dadurch gekennzeichnet, dass** die Tragfeder (12) radaufhängungsseitig an einem etwa horizontal und zur senkrechten Fahrzeuglängsmittelebene ausgerichteten Ausleger (10a) eines Radträgers (10) der Radaufhängung abgestützt und der Stoßdämpfer (14) mit seinem Dämpferrohr (14a) an einer darüber liegenden Konsole (10b) des Radträgers (10) angelenkt ist.

## Claims

1. Device for adjusting the height of the body of a motor vehicle, comprising a bearing spring (12) which is inserted between the wheel guiding element (10) of the wheel suspension and the body (16) and which is supported on a spring plate (22) which is vertically adjustable by way of an actuating device (18), and comprising an overload spring (32) which limits a defined spring excursion in the deflection direction, **characterised in that** the overload spring (32) is assigned an actuating device (18), by means of which the overload spring (32) is vertically adjustable, preferably following a vertical adjustment of the spring plate (22), and **in that** the overload spring (32) is arranged between a body-side damper bearing (24) of a telescopic shock absorber (14) of the wheel suspension and the damper cylinder (14a) of said shock absorber, and **in that** the overload spring (32) is axially adjustable by way of the actuating device (18).

2. Device according to claim 1, **characterised in that** the overload spring (32) can be adjusted in height dynamically coupled to the spring plate (22).

3. Device according to either claim 1 or claim 2, **characterised in that** the overload spring (32) and the spring plate (22) are assigned to a common actuating device (18).

4. Device according to any of the preceding claims, **characterised in that** the overload spring (32) is coupled to the actuating device (18) such that, with adjustment of the height of the body, the overload spring (32) is also adjusted to maintain a substantially equal spring excursion.

5. Device according to any of the preceding claims, **characterised in that** the overload spring (32) is axially movable by way of an actuating drive (34) and **in that** the actuating drive (34) is drivingly connected to the actuating device (18) of the bearing spring (12).

6. Device according to any of the preceding claims, **characterised in that** the actuating device (18) is an electromotive actuator comprising a ball screw drive (46) which acts on the bearing spring (12), the threaded nut (64) of which, which is axially movable by way of a rotatable threaded spindle (54), interacts with the adjustable spring plate (22) of the bearing spring (12) and **in that** the threaded spindle (54) is drivingly coupled to the actuating drive (34) of the overload spring (32).

7. Device according to any of the preceding claims, **characterised in that**, in a wheel suspension comprising a bearing spring (12) and an overload spring (32) which are spatially separated from one another, the actuating drive (34) of the overload spring (32) and the actuating device (18) are coupled to one another by means of a flexible, torsion-resistant shaft (72).

8. Device according to any of claims 5 to 7, **characterised in that** the actuating drive (34) of the overload spring (32) is formed by a screw drive comprising a threaded sleeve (26b) which is supported on the body side and a threaded nut (36) which can be rotated relative to the sleeve and which holds the overload spring (32), the threaded nut (36) being rotatable by way of a gearwheel drive (42).

9. Device according to any of claims 6 to 8, **characterised in that** the threaded spindle (54) of the ball screw drive (46) drives the actuating drive (34) of the overload spring (32) by way of a gearwheel drive (70).

10. Device according to either claim 8 or claim 9, **characterised in that** the gearwheel drive (70, 42) on the actuating device (18) and/or on the actuating drive (34) of the overload spring (32) is a spur gear drive, the pinions (68, 40) of which are drivingly interconnected by way of the flexible shaft (72).

11. Device according to any of the preceding claims, **characterised in that** on the body side the bearing spring (12) and the actuating device (18) are arranged on or articulated to a lower longitudinal member (20) of the body (16) of the motor vehicle and the shock absorber (14) together with the overload spring (32) is, higher up, arranged on or articulated to a side wall (30) which adjoins the longitudinal member (20) and **in that** the gearwheel drives (42, 70) of the overload spring (32) and of the actuating device (18) are coupled to one another by way of the flexible shaft (72) which extends approximately vertically and parallel to the side wall (30).

12. Device according to claim 11, **characterised in that** the bearing spring (12) is supported on the wheel suspension side on an arm (10a) of a wheel carrier (10) of the wheel suspension, which arm is oriented approximately horizontally and towards the vertical longitudinal centre plane of the vehicle, and the shock absorber (14) together with its damper tube (14a) is articulated to a bracket (10b), located above, of the wheel carrier (10).

## Revendications

1. Dispositif de réglage en hauteur de la carrosserie d'un véhicule automobile, comprenant un ressort de suspension (12) imbriqué entre un élément de guidage de roue (10) de la suspension de roue et la structure (16), lequel ressort s'appuie sur une cuvette de ressort (22), qui peut être réglée en hauteur via un dispositif de réglage (18), et un ressort d'appoint (32) délimitant une course de ressort dans la direction de compression, **caractérisé en ce qu'**au ressort d'appoint (32) est affecté un dispositif de réglage (18) avec lequel le ressort d'appoint (32), de préférence à la suite d'un réglage en hauteur de la cuvette de ressort (22), peut être réglable en hauteur, **en ce que** le ressort d'appoint (32) est aménagé entre un palier côté structure (24) d'un amortisseur de chocs télescopique (14) de la suspension de roue et son cylindre d'amortisseur (14a) et **en ce que** le ressort d'appoint (32) peut être réglé axialement via le dispositif de réglage (18).

2. Dispositif selon la revendication 1, **caractérisé en ce que** le ressort d'appoint (32) peut être réglé en hauteur en couplage de mouvement avec la cuvette de ressort (22).

3. Dispositif selon la revendication 1 ou la revendication 2, **caractérisé en ce que** le ressort d'appoint (32) et la cuvette de ressort (22) sont affectés à un dispositif de réglage commun (18).

4. Dispositif selon l'une quelconque des revendications précédentes, **caractérisé en ce que** le ressort d'appoint (32) est couplé au dispositif de réglage (18) de sorte qu'avec un réglage en hauteur de la carrosserie, le ressort d'appoint (32) soit réglé également pour maintenir une course de ressort sensiblement égale.

5. Dispositif selon l'une quelconque des revendications précédentes, **caractérisé en ce que** le ressort d'appoint (32) peut être déplacé axialement via un mécanisme de commande (34) et **en ce que** le mécanisme de commande (34) est relié au dispositif de réglage (18) du ressort de suspension (12) en mode de commande.

6. Dispositif selon l'une quelconque des revendications précédentes, **caractérisé en ce que** le dispositif de réglage (18) est un actionneur électromoteur avec une vis d'entraînement à billes (46) agissant sur le ressort de suspension (12), vis dont l'écrou (64) axialement déplaçable sur une tige filetée rotative (54) coopère avec la cuvette de ressort réglable (22) du ressort de suspension (12) et **en ce que** la tige filetée (54) est couplée avec le mécanisme de commande (34) du ressort d'appoint (32) en mode de commande.

7. Dispositif selon l'une quelconque des revendications précédentes, **caractérisé en ce que**, dans une suspension de roue avec un ressort de suspension (12) et un ressort d'appoint (32) aménagés séparés l'un de l'autre spatialement, le mécanisme de commande (34) du ressort d'appoint (32) et le dispositif de réglage (18) sont couplés l'un à l'autre au moyen d'un arbre souple (72) résistant à la torsion.

8. Dispositif selon l'une quelconque des revendications 5 à 7, **caractérisé en ce que** le mécanisme de commande (34) du ressort d'appoint (32) est formé par une commande à vis avec une douille filetée (26b) qui s'appuie côté structure et un écrou fileté (36) qui peut tourner par rapport à celle-ci et reçoit le ressort d'appoint (32), dans lequel l'écrou fileté (36) peut tourner sur un engrenage (42).

9. Dispositif selon l'une quelconque des revendications 6 à 8, **caractérisé en ce que** la tige filetée (54) de la vis d'entraînement à billes (46) débouche sur le mécanisme de commande (34) du ressort d'appoint (32) via un engrenage (70).

10. Dispositif selon l'une quelconque des revendications 8 ou 9, **caractérisé en ce que** l'engrenage (70, 42) sur le dispositif de réglage (18) et/ou sur le mécanisme de commande (34) du ressort d'appoint (32) est un engrenage droit dont les pignons (68, 40) sont reliés l'un à l'autre via l'arbre souple (72) en mode de commande.

11. Dispositif selon l'une quelconque des revendications précédentes, **caractérisé en ce que** le ressort de suspension (12) et le dispositif de réglage (18) sont aménagés ou articulés côté structure sur une poutre longitudinale (20), s'étendant plus bas, de la structure (16) du véhicule automobile et l'amortisseur de chocs (14) avec le ressort d'appoint (32) s'étendant plus haut sur une paroi latérale (30) se raccordant à la poutre longitudinale (20), et **en ce que** les engrenages (42, 70) du ressort d'appoint (32) et du dispositif de réglage (18) sont couplés l'un à l'autre via l'arbre souple (72) s'étendant à peu près perpendiculairement et parallèlement à la paroi latérale (30).

12. Dispositif selon la revendication 11, **caractérisé en ce que** le ressort de suspension (12) s'appuie, côté suspension de roue, sur un bras (10a) d'un support de roue (10) de la suspension de roue dirigé à peu près horizontalement et centré par rapport au plan central longitudinal du véhicule et l'amortisseur de chocs (14) est articulé avec son tube amortisseur (14a) sur une console (10b) du support de roue (10) disposée au-dessus.
